# FASCICULE DE BREVET EUROPEEN

(11) **EP 3 695 313 B1**
(45) Date de publication et mention de la délivrance du brevet: **04.10.2023**
(21) Numéro de dépôt: 18782465.1
(22) Date de dépôt: 11.10.2018
(51) Int. Cl.: G06F 9/52

(54) **PROCÉDÉ ET DISPOSITIF ÉLECTRONIQUE D'IMPLÉMENTATION D'UN PARTITIONNEMENT LORS DE L'EXÉCUTION D'APPLICATIONS LOGICIELLES SUR UNE PLATEFORME COMPRENANT UN PROCESSEUR MULTI-COEURS, PROGRAMME D'ORDINATEUR ET SYSTÈME ÉLECTRONIQUE ASSOCIÉS**
ELEKTRONISCHE VORRICHTUNG UND VERFAHREN ZUR DURCHFÜHRUNG EINER PARTITIONIERUNG WÄHREND DER AUSFÜHRUNG VON SOFTWAREANWENDUNGEN AUF EINER PLATTFORM MIT EINEM MEHRKERNPROZESSOR, ZUGEHÖRIGES COMPUTERPROGRAMM UND ELEKTRONISCHES SYSTEM
ELECTRONIC DEVICE AND METHOD FOR IMPLEMENTING PARTITIONING DURING THE EXECUTION OF SOFTWARE APPLICATIONS ON A PLATFORM COMPRISING A MULTI-CORE PROCESSOR, ASSOCIATED COMPUTER PROGRAM AND ELECTRONIC SYSTEM

(30) Priorité: 11.10.2017 FR 1701054
(43) Date de publication de la demande: 19.08.2020
(73) Titulaire: Thales, 92400 Courbevoie (FR)
(72) Inventeur: FUMEY, Marc, 33700 Merignac (FR); BOSSON, Joël, 33700 Merignac (FR); AEGERTER, Tarik, 33700 Merignac (FR); MEYER, Yves, 33700 Merignac (FR); LACQUIT, Hubert, 33700 Merignac (FR)
(74) Mandataire: Lavoix
(86) Numéro de dépôt international: PCT/EP2018/077712
(87) Numéro de publication internationale: WO 2019/072958

(56) Documents cités:
- US-A1- 2006 198 358
- GIANNOPOULOU GEORGIA ET AL: "Scheduling of mixed-criticality applications on resource-sharing multicore systems", 2013 PROCEEDINGS OF THE INTERNATIONAL CONFERENCE ON EMBEDDED SOFTWARE (EMSOFT), IEEE, 29 septembre 2013 (2013-09-29), pages 1-15, XP032524797, DOI: 10.1109/EMSOFT.2013.6658595
- Georgia Giannopoulou: "Implementation of Mixed-Criticality Applications on Multi-Core Architectures", , 1 janvier 2017 (2017-01-01), XP055495583, DOI: 10.3929/ethz-a-010811178 Extrait de l'Internet: URL:https://www.research-collection.ethz.c h/bitstream/handle/20.500.11850/125288/1/E TH24024.pdf [extrait le 2018-07-26]
- HJORTNAES K ET AL: "Time and Space Partitioning in Spacecraft Avionics", SPACE MISSION CHALLENGES FOR INFORMATION TECHNOLOGY, 2009. SMC-IT 2009. THIRD IEEE INTERNATIONAL CONFERENCE ON, IEEE, PISCATAWAY, NJ, USA, 19 juillet 2009 (2009-07-19), pages 13-20, XP031522297, ISBN: 978-0-7695-3637-8
- JUSTIN LITTLEFIELD-LAWWILL ET AL: "System considerations for robust time and space partitioning in Integrated Modular Avionics", DIGITAL AVIONICS SYSTEMS CONFERENCE, 2008. DASC 2008. IEEE/AIAA 27TH, IEEE, PISCATAWAY, NJ, USA, 26 octobre 2008 (2008-10-26), pages 1.B.1-1, XP031372532, ISBN: 978-1-4244-2207-4
- CONSTANCE L HEITMEYER ET AL: "Formal specification and verification of data separation in a separation kernel for an embedded system", PROCEEDINGS OF THE 13TH ACM CONFERENCE ON COMPUTER AND COMMUNICATIONS SECURITY; [ACM CONFERENCE ON COMPUTER AND COMMUNICATIONS SECURITY], NEW YORK, NY : ACM, US, 30 October 2006 (2006-10-30), pages 346-355, XP058157174, DOI: 10.1145/1180405.1180448 ISBN: 978-1-59593-518-2

## Description

La présente invention concerne un procédé d'implémentation d'un partitionnement lors de l'exécution d'applications logicielles sur une plateforme comprenant un processeur multi-coeurs ayant plusieurs coeurs distincts, le procédé d'implémentation étant mis en oeuvre par un dispositif électronique d'implémentation.

L'invention concerne également un programme d'ordinateur comportant des instructions logicielles qui, lorsqu'elles sont exécutées par un ordinateur, mettent en oeuvre un tel procédé.

L'invention concerne également un dispositif électronique d'implémentation d'un partitionnement lors de l'exécution d'applications logicielles sur une plateforme comprenant un processeur multi-coeurs ayant plusieurs coeurs distincts.

L'invention concerne également un système électronique comprenant une mémoire apte à stocker des applications logicielles ; une plateforme apte à exécuter chaque application logicielle, la plateforme comprenant un processeur multi-coeurs ayant plusieurs coeurs distincts ; et un tel dispositif électronique d'implémentation d'un partitionnement lors de l'exécution d'applications logicielles sur la plateforme.

L'invention concerne le domaine de la qualification de plateformes embarquées comportant un ou plusieurs processeurs multi-coeurs, en particulier dans le domaine avionique suivant la norme DO297.

L'utilisation de processeurs multi-coeurs apporte une difficulté importante pour la qualification des plateformes. En effet, l'exécution simultanée de plusieurs applications logicielles sur un même processeur multi-coeurs s'accompagne de risques de contentions à cause du partage de ressources communes (bus, mémoire) aux différents coeurs, sans que le comportement du processeur multi-coeurs puisse être maitrisé explicitement et de manière prédictive.

Le terme « contention » désigne toute situation dans laquelle au moins une activité menée par au moins un coeur d'un processeur multi-coeurs subit des retards dans son exécution à cause du parallélisme temporel permis par ce processeur multi-coeurs.

L'origine des contentions est généralement l'usage de ressources communes du processeur ou du système d'exploitation, également appelé OS (de l'anglais *Operating System*) aboutissant à des attentes générant ces retards. L'effet d'une contention est alors un retard sur l'exécution d'une application logicielle hébergée sur un coeur.

Un premier exemple de contention est le bus interne (appelé souvent « *interconnect* ») reliant les coeurs les uns aux autres, ainsi que les coeurs aux périphériques, qui ne permet pas toujours des transactions simultanées indépendantes entre coeurs ou entre les coeurs et les périphériques, tels que certaines mémoires cache intégrées ou la mémoire externe.

Un autre exemple de contention est l'usage de modules logiciels communs de l'OS installés sur un des coeurs et appelés par l'ensemble de coeurs, potentiellement simultanément. Des appels simultanés à de tels modules logiciels communs provoquent un arbitrage et une mise en attente de certaines demandes afin de sérialiser les traitements logiciels sur le coeur où le module logiciel commun est installé.

Un autre exemple de contention est une interruption momentanée de tous les coeurs sur évènement particulier sur un des coeurs afin de gérer un statut cohérent entre tous les coeurs.

Lorsque le processeur est en outre un processeur acheté auprès d'un fournisseur, ou processeur COTS (de l'anglais *Commercial Off-The-Shelf),* il est généralement impossible d'avoir accès au détail de conception des organes internes d'un tel processeur multi-coeurs, et il est donc très difficile, voire impossible de garantir un comportement déterministe du processeur.

Selon un premier type connu d'architecture logicielle pour une plateforme avec processeur multi-coeurs, également appelée architecture SMP (de l'anglais *Symetrical Multi-Processing),* un unique système d'exploitation décide à chaque instant quel traitement logiciel est exécuté sur quel coeur.

Selon un deuxième type connu d'architecture logicielle pour une plateforme avec processeur multi-coeurs, également appelée architecture AMP (de l'anglais *Asymetrical Multi-Processing),* chaque coeur séquence l'exécution d'un ensemble d'applications logicielles, de manière indépendante d'un coeur à l'autre, avec un système d'exploitation par coeur.

*"*Scheduling of Mixed-Criticality Applications on Resource-Sharing Multicore Systems", 2013 Proceedings of the International Conférence on Embedded software (EMSOFT), IEEE, 29 septembre 2013, de Giannopoulou et al et "Implementation of Mixed-Criticality Applications on Multi-Core Architectures", DOI: 10.3929/ethz-a-010811178, de Giannopoulou décrivent chacun un procédé d'implémentatior d'un partitionnement du type précité.

Toutefois, de telles architectures ne sont pas suffisamment intrinsèquement déterministes pour obtenir la qualification de plateformes avec processeurs multi-coeurs, en particulier dans le domaine avionique suivant la norme DO297.

Le but de l'invention est alors de proposer un procédé et un dispositif d'implémentation d'un partitionnement lors de l'exécution d'applications logicielles sur une plateforme avec processeur multi-coeurs, qui permettent de maitriser l'impact de contention(s) lors de l'exécution desdites applications logicielles et de faciliter alors la qualification de la plateforme.

A cet effet, l'invention a pour objet un procédé d'implémentation d'un partitionnement lors de l'exécution d'applications logicielles sur une plateforme comprenant un processeur multi-coeurs ayant plusieurs coeurs distincts, selon la revendication 1.

Avec le procédé d'implémentation selon l'invention, les coeurs sont synchronisés et l'exécution des applications logicielles est segmentée en zones temporelles (de l'anglais *Time Cluster*)*,* la commutation synchrone multi-coeurs permettant d'effectuer un partitionnement robuste entre deux zones temporelles successives, notamment au sens de la norme DO297.

Suivant d'autres aspects avantageux de l'invention, le procédé d'implémentation est selon l'une quelconque des revendications 2 à 5.

L'invention a également pour objet un programme d'ordinateur selon la revendication 6.

L'invention a également pour objet un dispositif électronique d'implémentation d'un partitionnement lors de l'exécution d'applications logicielles sur une plateforme comprenant un processeur multi-coeurs ayant plusieurs coeurs distincts, selon la revendication 7.

L'invention a également pour objet un système électronique selon la revendication 8.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système électronique selon l'invention, comprenant une mémoire apte à stocker des applications logicielles ; une plateforme apte à exécuter chaque application logicielle, la plateforme comportant des ressources, notamment au moins un processeur multi-coeurs ayant plusieurs coeurs distincts, et hébergeant un système d'exploitation ; et un dispositif électronique d'implémentation d'un partitionnement lors de l'exécution d'applications logicielles sur la plateforme ;
- la figure 2 est un organigramme d'un procédé, selon l'invention, d'implémentation d'un partitionnement lors de l'exécution d'applications logicielles sur la plateforme, le procédé étant mis en oeuvre par le dispositif d'implémentation de la figure 1 ;
- la figure 3 est une représentation schématique d'implémentation d'un partitionnement avec un processeur quadri-coeur pour une architecture générale ;
- la figure 4 est une vue analogue à celle de la figure 3 pour une architecture de type multitraitement symétrique, ou SMP (de l'anglais *Symetrical Multi-Processing*) ;
- la figure 5 est une vue analogue à celle de la figure 3 pour une architecture de type multitraitement asymétrique, ou AMP (de l'anglais *Asymetrical Multi-Processing)* ; et
- la figure 6 est une vue analogue à celle de la figure 3 avec un processeur bi-coeur pour une architecture mixte en termes de traitement.

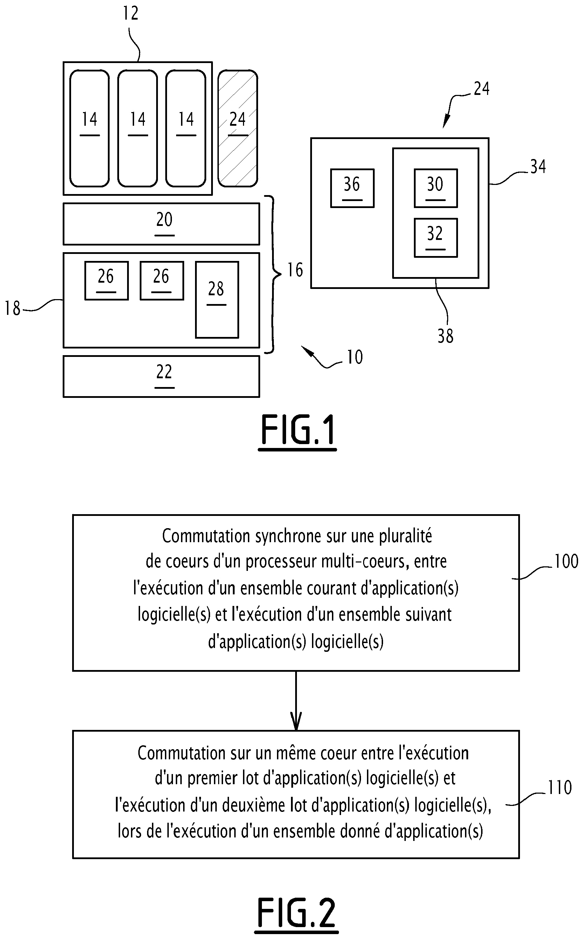

Sur la figure 1, un système électronique 10, notamment un système électronique avionique destiné à être embarqué à bord d'un aéronef, comprend une mémoire 12 apte à stocker des applications logicielles 14 ; une plateforme 16 apte à exécuter chaque application logicielle 14, la plateforme 16 comportant des ressources 18 et hébergeant au moins un système d'exploitation 20, la plateforme 16 étant reliée d'autres systèmes électroniques 22, tels que d'autres systèmes électroniques avioniques de l'aéronef.

Le système électronique 10 comprend en outre, selon l'invention, un dispositif électronique 24 d'implémentation d'un partitionnement lors de l'exécution d'applications logicielles 14 sur la plateforme 16.

Sur la figure 1, par souci de simplification du dessin, la mémoire 12 a été représentée à l'extérieur du rectangle symbolisant les ressources 18, ceci afin de faire apparaitre de manière distincte la couche logicielle correspondant aux applications logicielles 14, ainsi que le cas échéant au dispositif d'implémentation 24. Néanmoins, l'homme du métier comprendra bien entendu que la mémoire 12 est incluse dans les ressources 18 de la plateforme 16.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles 14 distinctes, et le dispositif électronique d'implémentation 24 est alors configuré pour implémenter le partitionnement lors de l'exécution de ces applications logicielles 14.

Chaque application logicielle 14 est destinée à être exécutée par la plateforme 16 et alors conçue pour émettre un ou plusieurs appels à destination du système d'exploitation 20 hébergé par la plateforme 16 et est également configurée pour utiliser des ressources 18 de la plateforme 16.

Lorsque le système électronique 10 est un système électronique avionique embarqué à bord de l'aéronef, chaque application logicielle 14 est également appelée fonction avionique. Les applications logicielles 14 remplissent par exemple différentes fonctions pour l'accomplissement d'un vol, et sont par exemple installées sur différentes plateformes 16 et utilisent les ressources 18 desdites plateformes 16.

De telles fonctions étant critiques, comme par exemple le système de freinage ou le système de gestion du vol, l'exécution de chaque application logicielle 14 doit être séparée de manière robuste de l'exécution des autres applications logicielles 14, pendant toute leur durée d'exécution.

La plateforme 16 est notamment destinée à être embarquée à bord de l'aéronef. La plateforme 16 est, par exemple, une unité de traitement d'informations formée d'une ou plusieurs mémoires associées à un ou plusieurs processeurs.

L'invention est applicable à différents types d'architectures logicielles, notamment à une architecture dite de multitraitement symétrique, également appelée architecture SMP (de l'anglais *Symetrical Multi-Processing*), ou encore à une architecture dite de multitraitement asymétrique, également appelée architecture AMP (de l'anglais *Asymetrical Multi-Processing).*

Une architecture SMP désigne plus précisément une architecture logicielle où le système d'exploitation 20 décide à chaque instant quel processus est exécuté sur quel coeur de processeur.

Dans le cas de l'architecture SMP, la plateforme 16 comprend par exemple un seul système d'exploitation 20, et une seule partition est active à un instant temporel donné. Pour l'architecture SMP, la plateforme 16 héberge alors un unique système d'exploitation 20 pour tous les coeurs.

Dans le cas de l'architecture SMP, l'installation d'applications logicielles 14 est, par exemple, faite en parallèle sur plusieurs coeurs.

Une architecture AMP désigne plus précisément une architecture logicielle où chaque coeur séquence un ensemble d'applications logicielles de manière indépendante des autres coeurs.

Dans le cas de l'architecture AMP, la plateforme 16 comprend par exemple une pluralité de systèmes d'exploitation 20, en hébergeant un système d'exploitation 20 pour chaque coeur, permettant alors d'activer des partitions différentes à un instant temporel donné.

Dans le cas de l'architecture AMP, l'installation d'applications logicielles 14 est, par exemple, faite de manière séquentielle sur un seul coeur indépendamment des autres coeurs.

Les ressources 18 de la plateforme 16 sont des éléments physiques ou logiques propres à être mis à disposition de la ou des applications logicielles 14.

Les ressources 18 sont, par exemple, réparties en les catégories suivantes :
- les ressources de type traitement de données (en anglais « *processing* »). De telles ressources comportent par exemple un ou plusieurs processeurs multi-coeurs ayant chacun plusieurs coeurs distincts ;
- les ressources de type mémoire de masse (en anglais « *mass memory* ») ;
- les ressources de type entrées et sorties ;
- les ressources spécifiques au réseau avionique. De telles ressources sont, par exemple, les routeurs de communication d'un réseau ARINC664 ; et
- les ressources de type graphique, c'est-à-dire les ressources permettant un affichage. Un écran est un exemple de telles ressources.

Dans l'exemple de la figure 1, en termes de ressources de type traitement de données, la plateforme 16 comprend plusieurs processeurs multi-coeurs 26 ayant chacun plusieurs coeurs distincts, et plus particulièrement deux processeurs multi-coeurs 26. En variante, la plateforme 16 comprend un unique processeur multi-coeurs 26 ayant plusieurs coeurs distincts.

Dans l'exemple de la figure 1, en termes de ressources de type mémoire de masse, la plateforme 16 comprend une mémoire de masse 28.

Le système d'exploitation 20 est, par exemple, un système d'exploitation conforme à la norme ARINC 653, ou un système d'exploitation POSIX, ou encore un hyperviseur, ou encore un middleware.

L'homme du métier comprendra alors que le système d'exploitation 20 s'entend au sens large, et est, de manière plus générale, un ensemble d'au moins un logiciel de base, conçu pour offrir des services de différents types à chaque application 14.

Le dispositif électronique d'implémentation 24 est configuré pour mettre en oeuvre le partitionnement souhaité lors de l'exécution des applications logicielles 14 sur la plateforme 16 comprenant au moins un processeur multi-coeurs 26.

Le dispositif électronique d'implémentation 24 comprend un premier module de commutation 30 configuré pour commuter entre l'exécution d'un ensemble courant d'application(s) logicielle(s) 14 sur une pluralité de coeurs du processeur 26 correspondant et l'exécution d'un ensemble suivant d'application(s) logicielle(s) 14 sur la pluralité de coeurs du processeur 26 correspondant, de manière synchrone sur ladite pluralité de coeurs.

En complément facultatif, le dispositif électronique d'implémentation 24 comprend un deuxième module de commutation 32 configuré pour commuter entre l'exécution d'une première application logicielle et l'exécution d'une deuxième application logicielle sur un même coeur, lors l'exécution d'un ensemble donné d'application(s) logicielle(s) 14.

Comme représenté sous forme de hachures sur la figure 1, le dispositif d'implémentation 24 est, de préférence, apte à être exécuté directement par la plateforme 16 et à utiliser alors ses ressources 18. Le dispositif d'implémentation 24 est alors de préférence hébergé en outre par le système d'exploitation 20.

En variante, également visible sur la figure 1, le dispositif d'implémentation 24 est distinct de la plateforme 16, et comprend une unité de traitement d'informations 34 formée par exemple d'un processeur 36 associé à une mémoire 38.

Dans l'exemple de la figure 1, que le dispositif d'implémentation 24 soit distinct de la plateforme 16, ou bien hébergé et exécuté par la plateforme 16, le premier module de commutation 30, et en complément facultatif le deuxième module de commutation 32, sont réalisés chacun sous forme d'un logiciel, ou d'une brique logicielle, exécutable par un processeur, tel que le processeur 32 lorsque le dispositif d'implémentation 24 est distinct de la plateforme 16. La mémoire 34 du dispositif d'implémentation 24 est alors apte à stocker un premier logiciel de commutation configuré pour commuter, de manière synchrone sur ladite pluralité de coeurs du processeur 26 correspondant, entre l'exécution de l'ensemble courant d'application(s) logicielle(s) 14 et l'exécution de l'ensemble suivant d'application(s) logicielle(s) 14. En complément facultatif, la mémoire 34 du dispositif d'implémentation 24 est alors apte à stocker un deuxième logiciel de commutation configuré pour commuter, sur un même coeur, entre l'exécution de la première application logicielle et l'exécution de la deuxième application logicielle, lors l'exécution dudit ensemble courant d'application(s) logicielle(s) 14.

En variante non représentée, le premier module de commutation 30, et en complément facultatif le deuxième module de commutation 32, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*)*.*

Lorsque le dispositif d'implémentation 24 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le premier module de commutation 30 est alors configuré pour effectuer une ou plusieurs commutations synchrones multi-coeurs 40 sur une pluralité de coeurs d'un processeur multi-coeurs 26 correspondant.

Pour effectuer une commutation synchrone multi-coeurs 40, le premier module de commutation 30 est configuré pour effectuer, de manière synchrone sur la pluralité de coeurs d'un processeur multi-coeurs 26 correspondant, toutes les actions parmi un premier groupe d'actions consistant en : une attente, synchronisée sur la pluralité de coeurs, de la fin de l'exécution de traitement(s) non-interruptible(s) de l'ensemble courant d'application(s) logicielle(s) ; et une purge de toute(s) ressource(s) mémoire(s) associée(s) à l'ensemble courant d'application(s) logicielle(s).

Par ressource mémoire de la pluralité de coeurs, on entend de manière générale tout espace mémoire d'un coeur, qu'il s'agisse d'un cache, d'un registre ou encore d'un espace mémoire de taille plus importante.

La purge d'une ressource mémoire est la remise à zéro, ou encore la réinitialisation, de cette ressource mémoire.

Le premier module de commutation 30 est de préférence configuré pour effectuer chaque commutation synchrone multi-coeurs 40 sur tous les coeurs du processeur multi-coeurs 26 correspondant. Le cas échéant, le premier module de commutation 30 est configuré pour effectuer les actions précitées du premier groupe d'actions de manière synchrone sur tous les coeurs du processeur multi-coeurs 26 correspondant.

L'homme du métier comprendra qu'une commutation synchrone multi-coeurs 40 est déclenchée à un instant déterminé par la plateforme 16, typiquement par configuration, et ce pour la pluralité de coeurs concernée, ce déclenchement étant, en vue du synchronisme précité, effectué en même temps pour ladite pluralité de coeurs, et étant alors simultané ou quasi-simultané. La notion de synchronisme dépend des applications logicielles 14, une durée dédiée à la commutation synchrone, telle que typiquement quelques centaines de micro-secondes, est par exemple définie comme une durée pendant laquelle aucune activité applicative n'est exécutée et les activités de commutation sur les différents coeurs sont en partie séquentielles. En fin de commutation, l'activité applicative est relancée simultanément sur tous les coeurs.

Le premier module de commutation 30 est configuré pour effectuer toutes les actions du premier groupe d'actions, sur la pluralité de coeurs du processeur multi-coeurs 26 correspondant ou sur tous les coeurs du processeur multi-coeurs 26 correspondant.

En complément, le premier module de commutation 30 est configuré pour effectuer en outre toutes les actions parmi un deuxième groupe d'actions consistant en : une réinitialisation d'entrée(s)-sortie(s) associée(s) à l'ensemble suivant d'application(s) logicielle(s) ; une sauvegarde du contexte de l'ensemble courant d'application(s) logicielle(s) ; et une restauration du contexte de l'ensemble suivant d'application(s) logicielle(s).

Le premier module de commutation 30 est de préférence configuré pour effectuer à la fois les actions du premier groupe d'actions et celles du deuxième groupe d'actions, dans l'ordre suivant :
+ attente, synchronisée sur la pluralité de coeurs, de la fin de l'exécution de traitement(s) non-interruptible(s) de l'ensemble courant d'application(s) logicielle(s) 14 ;
+ purge de toute(s) ressource(s) mémoire(s) associée(s) à l'ensemble courant d'application(s) logicielle(s) 14 ;
+ sauvegarde du contexte de l'ensemble courant d'application(s) logicielle(s) 14 ;
+ réinitialisation d'entrée(s)-sortie(s) associée(s) à l'ensemble suivant d'application(s) logicielle(s) 14 ;
   et
+ restauration du contexte de l'ensemble suivant d'application(s) logicielle(s) 14.

En complément facultatif, le deuxième module de commutation 32 est, lors de l'exécution d'un ensemble donné d'application(s) logicielle(s) 14, configuré pour commuter entre l'exécution d'une première application logicielle et l'exécution d'une deuxième application logicielle sur un même coeur. Le deuxième module de commutation 32 est alors configuré pour effectuer une commutation interne 42 à un coeur respectif du processeur 26 correspondant.

Pour effectuer une commutation interne 42 à un coeur respectif, le deuxième module de commutation 32 est configuré pour effectuer toutes les actions parmi le groupe consistant en : une attente de la fin de l'exécution de traitement(s) non-interruptible(s) de la première application logicielle ; une sauvegarde du contexte de la première application logicielle ; une purge de(s) ressource(s) mémoire(s) du coeur, dont les cache(s) privé(s) correspondant ; et une restauration du contexte de la deuxième application logicielle.

Le deuxième module de commutation 32 est configuré pour effectuer toutes les actions du groupe d'actions précité sur le coeur respectif du processeur multi-coeurs 26 correspondant.

Le fonctionnement du dispositif d'implémentation 24 selon l'invention va désormais être expliqué à l'aide de la figure 2 représentant un organigramme du procédé, selon l'invention, d'implémentation du partitionnement lors de l'exécution d'applications logicielles 14 sur la plateforme 16, le procédé étant mis en oeuvre par le dispositif électronique d'implémentation 24.

Lors d'une étape 100, le dispositif d'implémentation 24 met en oeuvre, via son premier module de commutation 32, une commutation synchrone multi-coeurs 40.

Cette étape de commutation synchrone multi-coeurs 100 comporte toutes les actions parmi le premier groupe d'actions consistant en : l'attente, synchronisée sur la pluralité de coeurs, de la fin de l'exécution de traitement(s) non-interruptible(s) de l'ensemble courant d'application(s) logicielle(s) ; et la purge de toute(s) ressource(s) mémoire(s) associée(s) à l'ensemble courant d'application(s) logicielle(s).

Cette étape de commutation synchrone multi-coeurs 100 est effectuée de manière synchrone sur la pluralité concernée de coeurs du processeur multi-coeurs 26 correspondant.

Cette étape de commutation synchrone multi-coeurs 100 est de préférence effectuée de manière synchrone sur tous les coeurs du processeur multi-coeurs 26 correspondant. La ou les actions précitées du premier groupe d'actions sont alors effectuées de manière synchrone sur tous les coeurs du processeur multi-coeurs 26 correspondant.

Chaque étape de commutation synchrone multi-coeurs 100 est déclenchée à un instant déterminé par la plateforme 16, typiquement par configuration, et ce pour la pluralité de coeurs concernée.

Chaque étape de commutation synchrone multi-coeurs 100 comporte toutes les actions du premier groupe d'actions, celles-ci étant alors effectuées sur la pluralité de coeurs du processeur multi-coeurs 26 correspondant ou de préférence sur tous les coeurs du processeur multi-coeurs 26 correspondant.

En complément, chaque étape de commutation synchrone multi-coeurs 100 comporte en outre toutes les actions parmi le deuxième groupe d'actions consistant en : la réinitialisation d'entrée(s)-sortie(s) associée(s) à l'ensemble suivant d'application(s) logicielle(s) ; la sauvegarde du contexte de l'ensemble courant d'application(s) logicielle(s) ; et la restauration du contexte de l'ensemble suivant d'application(s) logicielle(s).

En complément facultatif, lors d'une étape suivante 110, le dispositif d'implémentation 24 met en oeuvre, via son deuxième module de commutation 32, une ou plusieurs commutations internes 42 à un coeur respectif du processeur 26 correspondant.

Chaque étape de commutation sur un même coeur 110 entre l'exécution d'une première application logicielle et l'exécution d'une deuxième application logicielle sur un même coeur, lors l'exécution d'un ensemble donné d'application(s) logicielle(s), comporte toutes les actions parmi le groupe consistant en : l'attente de la fin de l'exécution de traitement(s) non-interruptible(s) de la première application logicielle ; la sauvegarde du contexte de la première application logicielle ; la purge de(s) ressource(s) mémoire(s) du coeur, dont les cache(s) privé(s) correspondant ; et la restauration du contexte de la deuxième application logicielle.

Chaque étape de commutation sur un même coeur 110 comporte toutes les actions du groupe d'actions précité sur le coeur respectif du processeur multi-coeurs 26 correspondant.

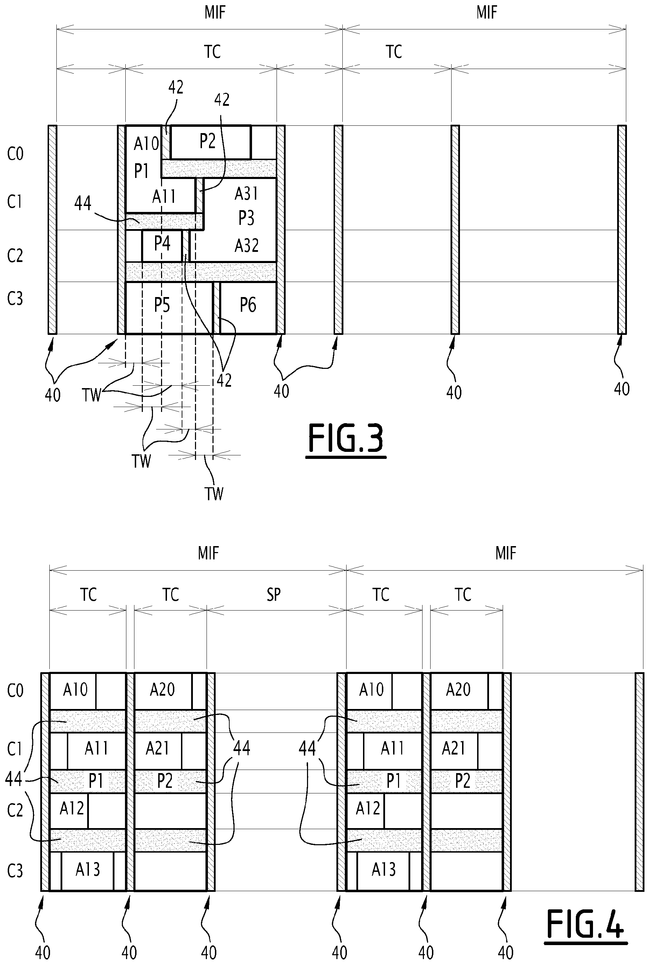

Ainsi, le dispositif d'implémentation 24 et le procédé d'implémentation selon l'invention permettent, via une ou plusieurs commutations synchrones multi-coeurs 40 successives et comme représenté dans l'exemple de la figure 3 avec un processeur quadri-coeur pour une architecture générale, de synchroniser les coeurs du processeur multi-coeurs 26 correspondant et de segmenter le temps d'exécution du processeur multi-coeurs 26 en zones temporelles, également notées TC (de l'anglais *Time Cluster*), une commutation synchrone multi-coeurs 40 étant placée entre deux zones temporelles TC successives.

Cette segmentation en zones temporelles TC avec des commutations synchrones multi-coeurs 40 permet alors d'obtenir un partitionnement plus robuste, notamment un partitionnement temporel absolu, lors de l'exécution des applications logicielles 14 sur la plateforme 16.

Par partitionnement temporel absolu, on entend une implémentation permettant un isolement entre zones temporelles TC quel que soit le coeur du processeur multi-caeurs 26 correspondant.

Par partitionnement spatial absolu, on entend une implémentation permettant un isolement, en termes d'allocations de ressources, notamment de ressources mémoires, entre toutes les partitions installées quel que soit le coeur du processeur multi-coeurs 26 correspondant.

Par partition, on entend un espace temporel et spatial alloué à une application logicielle 14 ou à un groupe d'applications logicielles 14 sur un ou plusieurs coeurs.

Autrement dit, chaque commutation synchrone multi-coeurs 40 permet alors d'assurer un nettoyage complet de tout le contexte multi-coeurs, c'est-à-dire d'éliminer toute trace d'exécution liée à la zone temporelle TC précédente pour les coeurs concernés, et alors d'offrir un partitionnement absolu, c'est-à-dire n'impliquant aucune contrainte introduisant des dépendances entre applications logicielles 14.

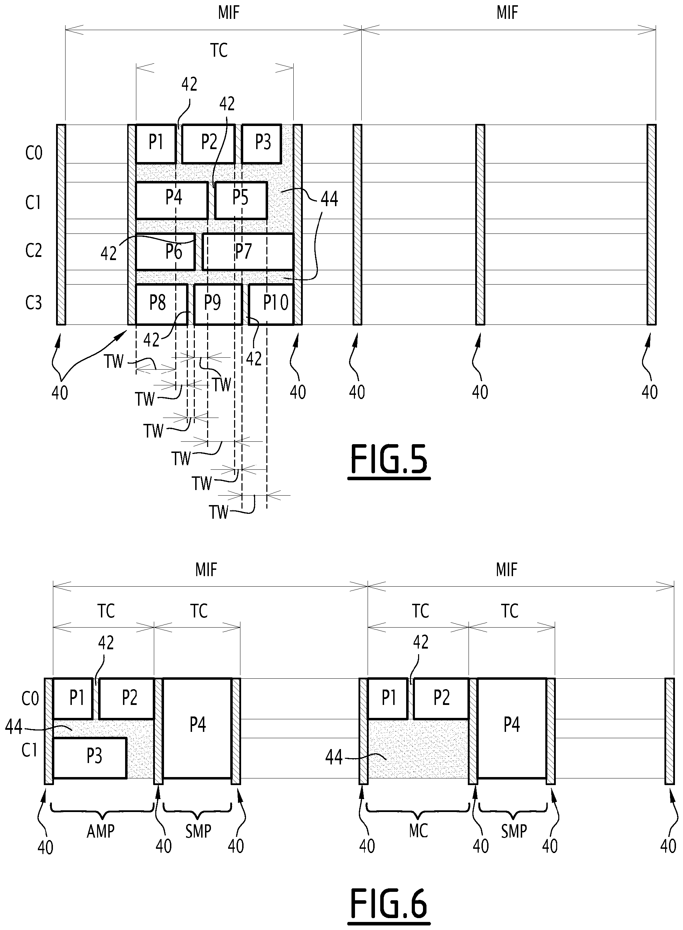

Sur les figures 3 à 6, chaque partition est désignée par une référence Pi, où i est un indice entier représentant le numéro de la partition correspondante. Chaque coeur du processeur multi-coeurs 26 de chacun de ces exemples est désigné par une référence Cj, où j est un indice entier compris entre 0 et 3 pour les exemples des figures 3 à 5 avec un processeur quadri-coeur, respectivement compris entre 0 et 1 pour l'exemple de la figure 6 avec un processeur bi-coeur, j représentant le numéro du coeur correspondant. Le cas échéant, Aij désigne une partie d'une application logicielle 14 installée dans une partition d'indice i et sur un coeur d'indice j.

Dans l'exemple des figures 3 à 6, chaque zone temporelle TC entre deux commutations synchrones multi-coeurs 40 comporte une ou plusieurs fenêtres temporelles, également notées TW (de l'anglais *Time Window*)*.* Chaque fenêtre temporelle TW désigne une plage temporelle délimitée par deux évènements successifs permettant de traiter une fin de partition ou une commutation interne 42 à un coeur. Cette notion est utile au système d'exploitation 20 en charge de traiter tous ces évènements de manière éventuellement centralisée, mais ne préjuge pas de l'impact d'un tel évènement sur un coeur qui n'est pas concerné par cet évènement.

Sur les figures 3 à 6, la notation MIF (de l'anglais *Mlnor Frame*) représente une base périodique du temps réel permettant la synchronisation de systèmes d'exploitations 20, notamment sur laquelle sont synchronisés les systèmes d'exploitations 20 des différents coeurs dans le cas de l'architecture AMP.

L'homme du métier observera également que le processeur multi-coeurs permet en outre d'offrir un partitionnement entre coeurs 44, également appelé partitionnement inter-coeurs, représenté par les zones remplies de points sur les figures 3 à 6, entre une partition ou application exécutée sur un coeur et une partition ou application exécutée sur un autre coeur.

La figure 4 est alors un exemple d'implémentation de partitionnement avec un processeur quadri-coeur pour une architecture de type SMP, la figure 5 étant un exemple similaire d'implémentation de partitionnement avec le processeur quadri-coeur pour une architecture de type AMP. Enfin, la figure 6 est un exemple d'implémentation de partitionnement avec un processeur bi-coeur pour une architecture de type mixte AMP / SMP, avec en outre un fonctionnement en mode mono-coeur sur le seul coeur C0 au cours de la zone temporelle repérée par l'accolade MC (pour mono-coeur).

De manière analogue à l'exemple de la figure 3, l'homme du métier observera, dans les exemples des figures 4 à 6, que les différentes commutations synchrones multi-coeurs 40 offrent un partitionnement temporel absolu entre zones temporelles TC. Dans l'exemple de la figure 4, la zone temporelle SP (de l'anglais *Spare*) correspond à une zone temporelle libre, pour laquelle aucune partition ou application n'est exécutée.

L'homme du métier comprendra que les différentes zones temporelles TC, telles que définies ci-dessus, en particulier la détermination des instants auxquels doivent être effectuées les commutations synchrones multi-coeurs 40 successives, sont définies lors d'une phase de conception préliminaire ou lors d'une phase de préparation de mission, préalablement à la mise en oeuvre du procédé selon l'invention.

Lorsque le système électronique 10 est un système électronique avionique embarqué à bord de l'aéronef, cette définition des zones temporelles TC est en outre de préférence faite préalablement au vol de l'aéronef, le procédé d'implémentation selon l'invention étant de préférence mis en oeuvre lors du vol de l'aéronef.

L'homme du métier notera également qu'il est en outre possible d'installer plusieurs applications logicielles 14 dans des partitions distinctes à l'intérieur d'une même zone temporelle TC suivant différentes méthodes. Suivant une première méthode, deux partitions sont installées en parallèle sur des coeurs séparés, et bénéficient d'un partitionnement entre coeurs, également appelé partitionnement inter-coeur. Suivant une deuxième méthode, deux partitions sont installées séquentiellement sur un même coeur ou un ensemble de coeurs, et bénéficient dans ce cas d'un partitionnement au travers d'une ou plusieurs commutations internes 42, coeur par coeur, également appelé partitionnement intra-coeur. Une troisième méthode correspond à un mélange des première et deuxième méthodes avec des partitionnements inter-coeur et intra-coeur.

Par ailleurs, la commutation interne 42 à un coeur ne peut éliminer toute cause de dépendance entre les applications logicielles 14 précédentes et suivantes d'un point de vue temporel (contention résultant d'une chaine entre application logicielle précédente, autre application logicielle sur un autre coeur, application logicielle suivante). Il en résulte la présence potentielle de gigues (de l'anglais *jitter*) sur le temps d'exécution d'une application logicielle 14, gigues dépendant de l'activité des autres applications logicielles 14. Il n'y a alors finalement pas de différence, vis-à-vis de l'isolement des applications logicielles 14 au sein d'une même zone temporelle TC, entre deux applications installées sur un même coeur et séparées par une commutation interne 42 et deux applications installées sur deux coeurs différents.

En complément facultatif et afin d'améliorer encore la sécurité de fonctionnement de la plateforme 16, le dispositif d'implémentation 24, ou encore un autre dispositif de surveillance, est configuré pour surveiller les temps d'exécution au sein d'une zone temporelle TC lorsque plusieurs applications logicielles 14 indépendantes sont installées. La conséquence d'un dépassement d'un temps d'exécution pouvant menacer la sécurité de fonctionnement, des actions correctives, telles qu'une réinitialisation des applications logicielles 14 concernées ou un arrêt des applications logicielles 14 les moins critiques, sont prévues suite à un déclenchement de cette surveillance. De telles actions correctives visent à restaurer un contexte plus sûr suite à de tels évènements et à décharger le processeur multi-coeurs 26 correspondant, afin de retrouver une situation exempte de contentions exceptionnelles.

On conçoit ainsi que le procédé et le dispositif d'implémentation 24 selon l'invention permettent, de par le partitionnement résultant notamment de chaque commutation synchrone multi-coeurs 40, de maitriser l'impact de contention(s) lors de l'exécution des applications logicielles 14 et de faciliter alors la qualification de la plateforme 16.

## Revendications

1. Procédé d'implémentation d'un partitionnement lors de l'exécution d'applications logicielles (14) sur une plateforme (16) comprenant un processeur multi-coeurs (26) ayant plusieurs coeurs distincts,
le procédé d'implémentation étant mis en oeuvre par un dispositif électronique d'implémentation (24) et comprenant l'étape suivante :
- commutation (100) entre l'exécution d'un ensemble courant d'application(s) logicielle(s) (14) sur une pluralité de coeurs et l'exécution d'un ensemble suivant d'application(s) logicielle(s) (14) sur la pluralité de coeurs, effectuée de manière synchrone sur ladite pluralité de coeurs,
l'étape de commutation synchrone multi-coeurs (100) comportant toutes les actions d'un premier groupe d'actions consistant en :
+ attente, synchronisée sur la pluralité de coeurs, de la fin de l'exécution de traitement(s) non-interruptible(s) de l'ensemble courant d'application(s) logicielle(s) (14) ; et
+ purge de toute(s) ressource(s) mémoire(s) associée(s) à l'ensemble courant d'application(s) logicielle(s) (14),
l'étape de commutation synchrone multi-coeurs (100) comportant en outre toutes les actions parmi un deuxième groupe d'actions consistant en :
+ réinitialisation d'entrée(s)-sortie(s) associée(s) à l'ensemble suivant d'application(s) logicielle(s) (14) ;
+ sauvegarde du contexte de l'ensemble courant d'application(s) logicielle(s) (14) ; et
+ restauration du contexte de l'ensemble suivant d'application(s) logicielle(s) (14).

2. Procédé selon la revendication 1, dans lequel l'étape de commutation synchrone multi-coeurs (100) est effectuée de manière synchrone sur tous les coeurs du processeur (26).

3. Procédé selon l'une quelconque des revendications précédentes, dans lequel le procédé comprend en outre l'étape suivante :
- commutation (110) entre l'exécution d'une première application logicielle (14) et l'exécution d'une deuxième application logicielle (14) sur un même coeur, lors l'exécution d'un ensemble donné d'application(s) logicielle(s) (14).

4. Procédé selon la revendication 3, dans lequel l'étape de commutation sur un même coeur (110) comporte toutes les actions parmi le groupe consistant en :
+ attente de la fin de l'exécution de traitement(s) non-interruptible(s) de la première application logicielle (14) ;
+ purge de(s) ressource(s) mémoire(s) du coeur, dont les cache(s) privé(s) correspondant ;
+ sauvegarde du contexte de la première application logicielle (14) ; et
+ restauration du contexte de la deuxième application logicielle (14).

5. Procédé selon l'une quelconque des revendications précédentes, dans lequel la plateforme (16) héberge un unique système d'exploitation (20) pour tous les coeurs et/ou un système d'exploitation (20) pour chaque coeur.

6. Programme d'ordinateur comportant des instructions logicielles qui, lorsqu'elles sont exécutées par un ordinateur, mettent en oeuvre un procédé selon l'une quelconque des revendications précédentes.

7. Dispositif électronique (24) d'implémentation d'un partitionnement lors de l'exécution d'applications logicielles (14) sur une plateforme (16) comprenant un processeur multi-coeurs (26) ayant plusieurs coeurs distincts, le dispositif (24) comprenant :
- un module de commutation (30) configuré pour commuter entre l'exécution d'un ensemble courant d'application(s) logicielle(s) (14) sur une pluralité de coeurs et l'exécution d'un ensemble suivant d'application(s) logicielle(s) (14) sur la pluralité de coeurs, de manière synchrone sur ladite pluralité de coeurs,
le module de commutation (30) étant configuré pour effectuer toutes les actions d'un premier groupe d'actions consistant en :
+ attente, synchronisée sur la pluralité de coeurs, de la fin de l'exécution de traitement(s) non-interruptible(s) de l'ensemble courant d'application(s) logicielle(s) (14) ; et
+ purge de toute(s) ressource(s) mémoire(s) associée(s) à l'ensemble courant d'application(s) logicielle(s) (14),
le module de commutation (30) étant configuré pour effectuer en outre toutes les actions parmi un deuxième groupe d'actions consistant en :
+ réinitialisation d'entrée(s)-sortie(s) associée(s) à l'ensemble suivant d'application(s) logicielle(s) (14) ;
+ sauvegarde du contexte de l'ensemble courant d'application(s) logicielle(s) (14) ; et
+ restauration du contexte de l'ensemble suivant d'application(s) logicielle(s) (14).

8. Système électronique (10) comprenant :
- une mémoire (12) apte à stocker des applications logicielles (14) ;
- une plateforme (16) apte à exécuter chaque application logicielle (14), la plateforme (16) comprenant un processeur multi-coeurs (26) ayant plusieurs coeurs distincts ; et
- un dispositif électronique (24) d'implémentation d'un partitionnement lors de l'exécution d'applications logicielles (14) sur la plateforme (16), le dispositif électronique d'implémentation (24) étant selon la revendication 7.

## Patentansprüche

1. Verfahren zum Implementieren einer Partitionierung bei der Ausführung von Softwareanwendungen (14) auf einer Plattform (16), umfassend einen Mehrkernprozessor (26), der mehrere separate Kerne aufweist,
wobei das Verfahren von einer elektronischen Implementierungsvorrichtung (24) durchgeführt wird und umfassend den folgenden Schritt:
- Umschalten (100) zwischen der Ausführung eines aktuellen Satzes von Softwareanwendungen (14) auf einer Vielzahl von Kernen und der Ausführung eines nächsten Satzes von Softwareanwendungen (14) auf der Vielzahl von Kernen, die synchron auf der Vielzahl von Kernen durchgeführt wird,
wobei der Schritt eines synchronen Mehrkernumschaltens (100) alle Aktionen einer ersten Gruppe von Aktionen umfasst, die aus Folgendem bestehen:
+ Warten, synchronisiert über die Vielzahl von Kernen, auf das Ende der Ausführung der nicht unterbrechbaren Verarbeitung(en) des aktuellen Satzes von Softwareanwendungen (14); und
+ Bereinigen aller Speicherressourcen, die mit dem aktuellen Satz von Softwareanwendungen (14) assoziiert sind,
wobei der Schritt eines synchronen Mehrkernumschaltens (100) ferner alle Aktionen einer zweiten Gruppe von Aktionen umfasst, die aus Folgendem bestehen:
+ Zurücksetzen der Ein-/Ausgänge, die mit dem nächsten Satz von Softwareanwendungen (14) assoziiert sind;
+ Speichern des Kontexts des aktuellen Satzes von Softwareanwendungen (14); und
+ Wiederherstellung des Kontexts des folgenden Satzes von Softwareanwendungen (14).

2. Verfahren nach Anspruch 1, wobei der Schritt eines synchronen Mehrkernumschaltens (100) synchron bei allen Kernen des Prozessors (26) durchgeführt wird.

3. Verfahren nach einem der vorherigen Ansprüche, wobei das Verfahren ferner den folgenden Schritt umfasst:
- Umschalten (110) zwischen der Ausführung einer ersten Softwareanwendung (14) und der Ausführung einer zweiten Softwareanwendung (14) auf einem gleichen Kern bei der Ausführung eines gegebenen Satzes von Softwareanwendung(en) (14).

4. Verfahren nach Anspruch 3, wobei der Schritt eines Umschaltens auf einen einzelnen Kern (110) alle Aktionen aus der Gruppe umfasst, die aus Folgendem besteht:
+ Warten auf das Ende der Ausführung der nicht unterbrechbaren Verarbeitungen der ersten Softwareanwendung (14);
+ Bereinigen der Speicherressourcen des Kerns, einschließlich der entsprechenden privaten Caches;
+ Speichern des Kontextes der ersten Softwareanwendung (14); und
+ Wiederherstellen des Kontexts der zweiten Softwareanwendung (14).

5. Verfahren nach einem der vorherigen Ansprüche, wobei die Plattform (16) ein einziges Betriebssystem (20) für alle Kerne und/oder ein Betriebssystem (20) für jeden Kern beherbergt.

6. Computerprogramm, umfassend Softwareanweisungen, die, wenn sie von einem Computer ausgeführt werden, ein Verfahren nach einem der vorherigen Ansprüche implementieren.

7. Elektronische Vorrichtung (24) zur Implementierung einer Partitionierung bei der Ausführung von Softwareanwendungen (14) auf einer Plattform (16), umfassend einen Mehrkernprozessor (26), der mehrere getrennte Kerne aufweist, wobei die Vorrichtung (24) umfasst:
- ein Schaltmodul (30), das konfiguriert ist, um zwischen der Ausführung eines aktuellen Satzes von Softwareanwendungen (14) auf einer Vielzahl von Kernen und der Ausführung eines nächsten Satzes von Softwareanwendungen (14) auf der Vielzahl von Kernen, die synchron auf der Vielzahl von Kernen durchgeführt wird, umzuschalten,
wobei das Schaltmodul (30) konfiguriert ist, um alle Aktionen einer ersten Gruppe von Aktionen auszuführen, die aus Folgenden bestehen:
+ Warten, synchronisiert über die Vielzahl von Kernen, auf das Ende der Ausführung der nicht unterbrechbaren Verarbeitungen des aktuellen Satzes von Softwareanwendungen (14); und
+ Bereinigen aller Speicherressourcen, die mit dem aktuellen Satz von Softwareanwendungen (14) assoziiert sind,
wobei das Schaltmodul (30) konfiguriert ist, um ferner alle Aktionen aus einer zweiten Gruppe von Aktionen auszuführen, die aus Folgenden bestehen:
+ Zurücksetzen der Ein-/Ausgänge, die mit dem nächsten Satz von Softwareanwendungen (14) assoziiert sind;
+ Speichern des Kontexts des aktuellen Satzes von Softwareanwendungen (14); und
+ Wiederherstellung des Kontexts der nächsten Einheit von Softwareanwendungen (14).

8. Elektronisches System (10) umfassend:
- einen Speicher (12), der geeignet ist, um Softwareanwendungen (14) zu speichern;
- eine Plattform (16), die geeignet ist, um jede Softwareanwendung (14) auszuführen, die Plattform (16) umfassend einen Mehrkernprozessor (26), der mehrere getrennte Kerne aufweist; und
- eine elektronische Vorrichtung (24) zum Implementieren einer Partitionierung bei der Ausführung von Softwareanwendungen (14) auf der Plattform (16), wobei die elektronische Vorrichtung (24) zum Implementieren gemäß Anspruch 7 ist.

## Claims

1. A method for implementing a partitioning during the execution of software applications (14) on a platform (16) comprising a multicore processor (26) having several distinct cores,
the implementing method being carried out by an electronic implementing device (24) and comprising the following step:
- switching (100) between the execution of a current set of software application(s) (14) on a plurality of cores and the execution of a subsequent set of software application(s) (14) on the plurality of cores, carried out in a synchronous manner on said plurality of cores,
the step of synchronous multicore switching (100) including all of the actions among a first group of actions consisting of:
+ waiting, synchronized over the plurality of cores, for uninterruptible process(es) of the current set of software application(s) (14) to finish running;
+ purging all memory resource(s) associated with the current set of software application(s) (14),
the step of synchronous multicore switching (100) further including all of the actions among a second group of actions consisting of:
+ resetting input(s)-output(s) associated with the subsequent set of software application(s) (14);
+ saving the context of the current set of software application(s) (14); and
+ restoring the context of the subsequent set of software application(s) (14).

2. The method according to claim 1, wherein the step of synchronous multicore switching (100) is performed synchronously over all of the cores of the processor (26).

3. The method according to any one of the preceding claims, wherein the method further comprises the following step:
- switching (110) between the running of a first software application (14) and the running of a second software application (14) on a same core, during the running of a given set of software application(s) (14).

4. The method according to claim 3, wherein the step of switching on a same core (110) includes all of the actions among the group consisting of:
+ waiting for uninterruptible process(es) of the first software application (14) to finish running;
+ purging memory resource(s) of the core, including the corresponding private cache(s);
+ saving the context of the first software application (14); and
+ restoring the context of the second software application (14).

5. The method according to any one of the preceding claims, wherein the platform (16) hosts a single operating system (20) for all of the cores and/or an operating system (20) for each core.

6. A computer program comprising software instructions which, when executed by a computer, carry out a method according to any one of the preceding claims.

7. An electronic device (24) for implementing a partitioning during the execution of software applications (14) on a platform (16) comprising a multicore processor (26) having several distinct cores, the device (24) comprising:
- a switching module (30) configured to switch between the execution of a current set of software application(s) (14) on a plurality of cores and the execution of a subsequent set of software application(s) (14) on the plurality of cores, in a synchronous manner on said plurality of cores,
the switching module (30) being configured to perform all of the actions among a first group of actions consisting of:
+ waiting, synchronized over the plurality of cores, for uninterruptible process(es) of the current set of software application(s) (14) to finish running;
+ purging all memory resource(s) associated with the current set of software application(s) (14),
the switching module (30) being configured to further perform all of the actions among a second group of actions consisting of:
+ resetting input(s)-output(s) associated with the subsequent set of software application(s) (14);
+ saving the context of the current set of software application(s) (14); and
+ restoring the context of the subsequent set of software application(s) (14).

8. An electronic system (10), comprising:
- a memory (12) able to store avionics software applications (14);
- a platform (16) able to execute each software application (14), the platform (16) comprising a multicore processor (26) having several distinct cores; and
- an electronic device (24) for implementing a partitioning during the running of software applications (14) on the platform (16), the electronic implementation device (24) being according to claim 7.
